# EUROPEAN PATENT APPLICATION

(11) **EP 2 478 948 A1**
(43) Date of publication of application: **25.07.2012**
(21) Application number: 12151267.7
(22) Date of filing: 16.01.2012
(51) Int. Cl.: B01D 35/30, B01D 46/00

(54) **Fluid-treatment device**

(30) Priority: 19.01.2011 IT MI20110046
(71) Applicant: Ferraresi, Vittorio, 22100 Como (IT); Bellino, Felice, 22044 Inverigo (Como) (IT)
(72) Inventor: Ferraresi, Vittorio, 22100 Como (IT); Bellino, Felice, 22044 Inverigo (Como) (IT)
(74) Representative: Lunati & Mazzoni S.r.L.

(57) **Abstract**

It is provided a fluid-treatment device (1) comprising a base (2) adapted to be coupled in a fluid-tight manner to a casing (5) defining a chamber (5a) suitable to receive a fluid and made up of at least one plate (3) provided with at least one through hole (4) adapted to enable passage of the fluid through the plate itself; at least one circulation element (7) defining part of a duct (6) in communication for fluid passage with the through hole (4); and said plate (3) having, in the vicinity of at least one of the through holes (4), a connecting profile (8) of one piece construction with the plate (3), which is made integral with the circulation element (7) through end-to-end welding and defines a portion of one said duct (6).

## Description

The present invention relates to a treatment device, i.e. a device for merely carrying out dispensing or also filtering and the like of fluids, of the type pointed out in the preamble of the first claim.

This device is usable for example on apparatuses for industrial use also intended for fluid (gas and liquid) filtering requiring contact surfaces suitable to be fully inspected, particularly smooth, without unevenness, easily washable and above all surfaces that, if necessary, can be sterilised with steam and/or chemical products. (It should be noted that sterilisation must be allowed to be carried out on 100% of the surfaces in contact with the fluid to be filtered). These apparatuses are also often used in the paint and ink industry, in the production of resins and in fine chemistry. Particularly emphasised is application of same for filtering water with exceptional pureness features and fluids which too require full sterilisation with chemical products or steam. Said apparatus being therefore intended for pharmaceutical, electronic, aerospace and food industry, for example.

Filtering is mentioned by way of example as one of the possible applications. It is known, in fact, that one of the most important and delicate process steps in producing and treating fluids of any types - gases, liquids, semiliquids suspensions, solutions, mixtures and the like of varying densities - is represented by filtering of said fluids.

There is therefore a multiplicity of types of filtering devices differing from each other both in terms of sizes and, above all, as regards the element intended for the filtering function. Particularly known are cartridge devices. In all known devices it is possible to distinguish a suitable casing, usually of cylindrical shape, defining a chamber inside which filtering is carried out, a filtering element adapted to select part of the fluid and inlet and outlet ducts enabling the fluid to enter and come out of the chamber.

One of the most important elements of these devices is the base to which most of the above described members are secured. In particular, the base is usually made up of two or three superposed plates that are suitably locked to each other. In addition, usually secured to the base is the filtering element and the inlet and outlet ducts.

Finally, in addition to the previously described ducts, the base also has a series of ducts enabling the fluid to enter the device, pass through the filtering element and come out of same through the outlet ducts.

During operation, the base is usually passed through first by the raw fluid and then by the filtered fluid and at the same time it is submitted to most of the stresses present in the device, mainly due to pressure of the plant on which said filtering device is installed.

The known art mentioned above has some important drawbacks.

In fact, the base is a very delicate component that therefore requires particular attention during the manufacturing process.

In fact, the ducts belonging to the base must have a smooth surface, without unevenness or discontinuity of the material that could cause accumulation of dirt or other inconvenience capable of producing decay of the fluid filtering quality. In addition, in order to ensure good flowing to the fluid, sharp edges or other elements that may modify said flowing must not be present. Therefore the seals of the filterning element must not only be made with the required tolerance values, but must also have perfectly smooth surfaces, washable and adapted to be easily inspected. It is therefore preferred to avoid welds at the junction region between the base and the ducts, which welds are characterised by low surface quality and are places where material accumulation occurs, which will impair the physicochemical qualities of the fluid over time.

For the above reason, a plurality of bayonet connections is formed on the base which are adapted to secure the filtering element to the base itself. These attachment elements or connections are obtained using particular working processes by chip removal, which will make manufacture of same particularly expensive and will consequently increase the costs of the filtering device.

In addition, for said working operations thick bases are needed which are therefore characterised by the fact of being heavy, thus bringing about a further cost increase.

Under this situation, the technical task underlying the present invention is to devise a fluid-treatment device capable of substantially obviating the mentioned drawbacks.

Within the scope of this technical task it is an important aim of the invention to provide a simple and less expensive device.

In particular, it is an important aim of the invention to make available a base provided with surfaces satisfying the necessary requirements in terms of roughness and ensuring a high quality level over the whole lifetime of the device. The technical task mentioned and the aims specified are achieved by a fluid-treatment device as claimed in the appended Claim 1.

Preferred embodiments are highlighted in the sub-claims.

The features and advantages of the invention are hereinafter clarified by the detailed description of preferred embodiments of the invention, with reference to the accompanying drawings, in which:
**Fig. 1** is a section view of an example of the device of the invention;
**Fig. 2** shows a portion of said section view;
**Fig. 3** shows a detail in section of the device of the invention;
**Fig. 4** is a section view of another example of the device according to the invention;
**Fig. 5** shows a portion of the device seen in Fig. 4; and
**Fig. 6** reproduces an exploded enlarged view of a detail of the device.

With reference to the drawings, the fluid-treatment device according to the invention is generally identified by reference numeral **1.**

It is usable for any type of treatment: from a mere distribution of fluids, in a heat exchanger for example, to other treatments. Preferably the device is employed on plants of small and medium sizes and is used for treating paints, chemical and pharmaceutical products, food products, products for electronics and still others. In particular device 1 can consist of tanks, filters or other similar elements intended for fluid treatment or others. In greater detail, device 1 advantageously consists of a filtering device for fluids.

As an alternative, device 1 is a heat exchanger.

It comprises a casing **5** defining an inner chamber **5a** adapted to receive a fluid inside the device and comprising a base **2,** and ducts **6** adapted to enable passage of fluid through the casing 5. The inner chamber 5a preferably consists of at least one filtering cartridge or filter **9** suitable to enable filtering of fluids and including a filtrate header **9a.**

Ducts 6 therefore constitute the volume inside which the fluids run and preferably comprise at least one inlet duct **6b** and at least one outlet duct **6a** adapted to take the fluid to the outside of casing 5 and disposed in the inner chamber 5a, and preferably communicating with the filtrate header 9a.

Ttherefore ducts 6 are partly made up of base 2 housing the through holes 4 and partly of channels 7 external to said base 2 and substantially consisting of metal pipelines connected to the base 2 itself. In particular, channels 7 comprise outer channels 7a external to the inner chamber 5a and at least one attachment element 7b for the filters 9, or the like, internal to the inner chamber 5b and connected to or integrated into the base 2.

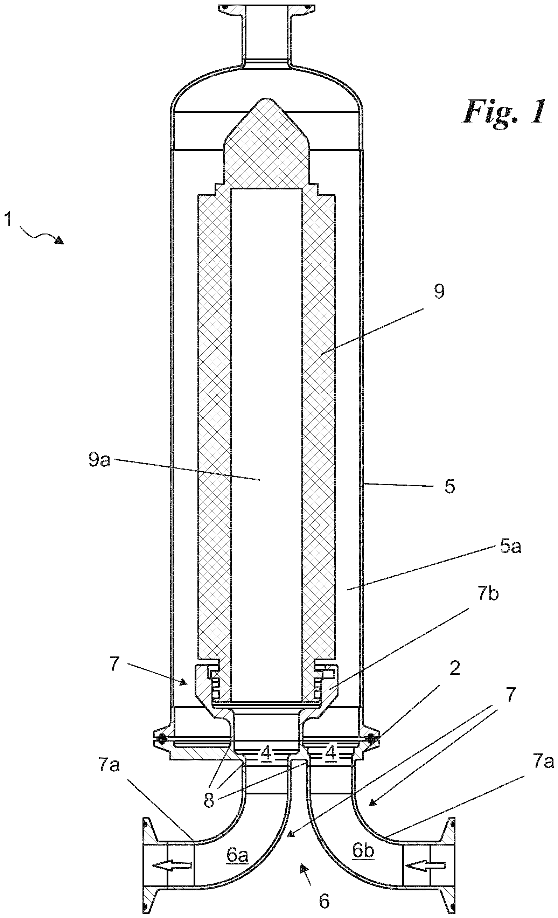

In particular, in Fig. 1, the inlet duct 6b consists of an outer channel 7a and of base 2 constituting a through hole 4, while the outlet duct 6a comprises an attachment element 7b, base 2 constituting a through hole 4, and an outer channel 7a.

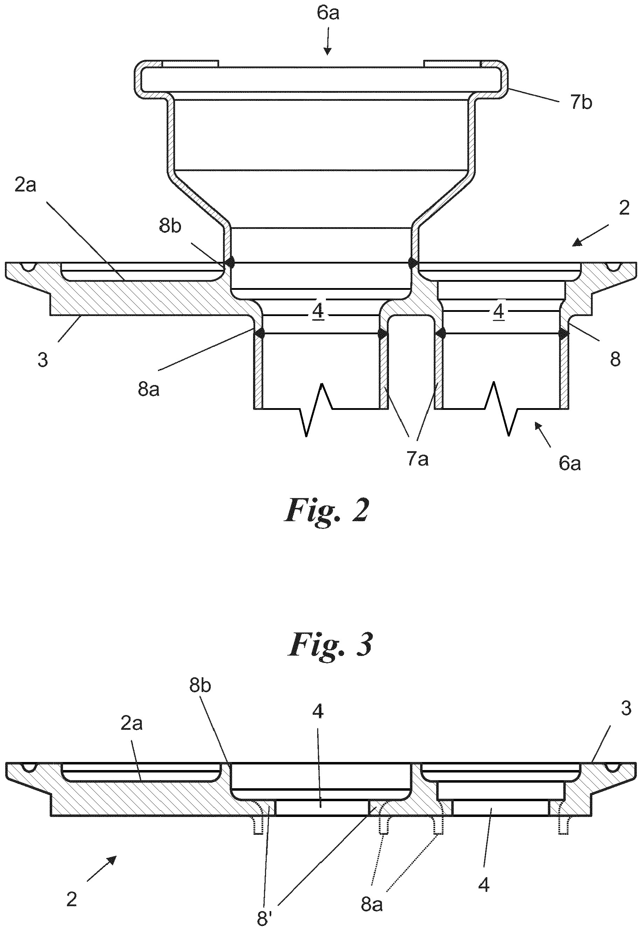

The attachment element 7b is preferably a bayonet connection and, if necessary, provision is made for use of bayonet connections 7b obtained from mechanical working of section members of round section, or the attachment elements 7b can also be obtained by plastic deformation from sheet metal (Fig. 2). It should also be recognised that the bayonet connection can be replaced by one of the plurality of possible, even different, attachment elements provided for ensuring tightness of the filtering elements.

Base 2 comprises at least one plate 3 including the through holes 4, part of channels 6, and further including a connecting shape or profile 8. The latter advantageously is of annular form protruding from plate 3 and allows connection between plate 3 and channels 7, in particular the attachment elements 7b by end-to-end welding. The connecting profile 8 is preferably of one piece construction with plate 3 and is preferably obtained through plastic deformation of the latter after mere mechanical working.

Profiles 8 can be lower profiles protruding from plate 3 in a direction opposite to the inside of the inner chamber 5a and adapted to allow connection of plate 3 to the outer channels 7a, or to an upper profile protruding from plate 3 to the inside of the inner chamber 5a and adapted to allow connection of plate 3 to the bayonet connection 7b.

In addition, the connecting profiles 8 are of two different tyes: deformed profiles **8a,** made by plastic deformation after mere mechanical working as specified in the following and integrated profiles **8b** obtained by chip removal.

In order to have an optimal collection of the fluid coming out of filter 9 and in particular for accomplishment of the connecting profile 8b, base 2 is provided with a collecting seat or annular groove **2a** adapted to convey the flow to duct **6b** while simultaneously obtaining, by chip removal, the profile 8b necessary for welding the bayonet connection 7b end-to-end.

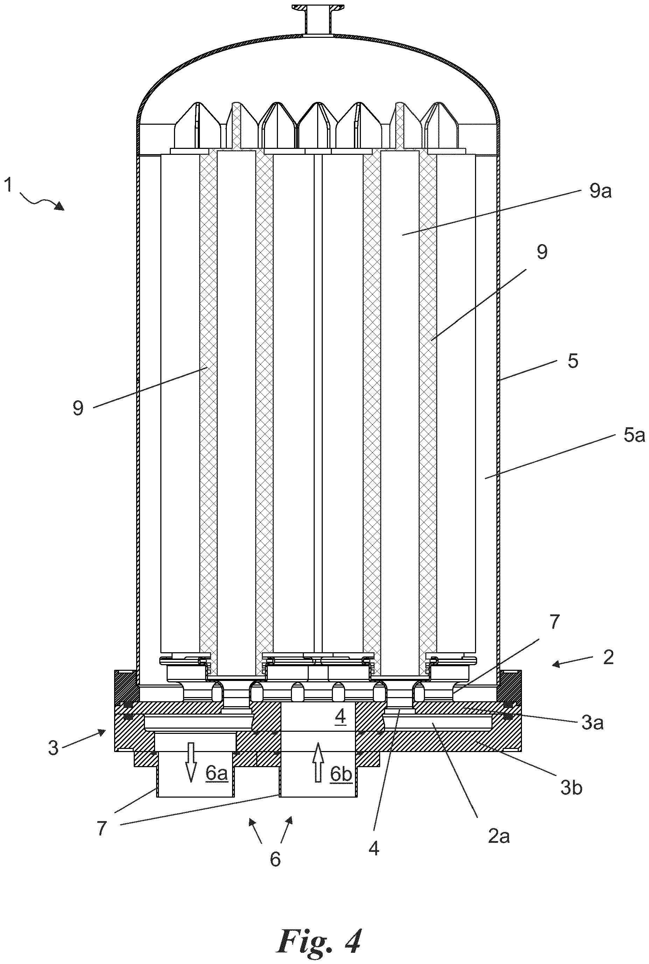

Finally, base 2 comprises a single plate 3 or, alternatively, several plates mutually connected in a fluid-tight manner (Fig. 4). In the last-mentioned case three plates are preferably present: an upper plate **3a** including the upper profiles 8a, a lower plate **3b** including the collecting seat or groove 2a and one or more lower flanges including portions of outer channels 7a. In the last-mentioned example plates 3a and 3b are sealingly mutually secured and preferably have at least one O-ring disposed between the two plates.

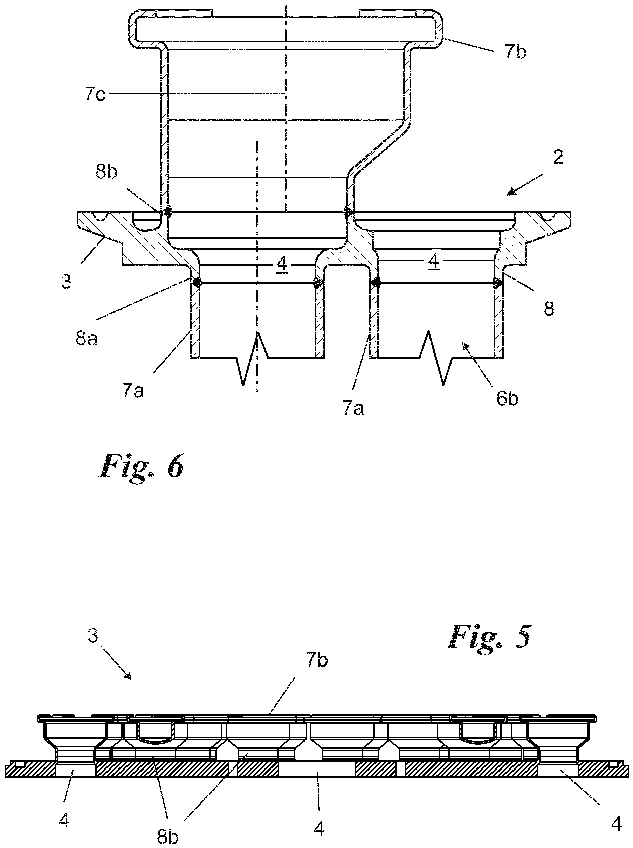

The bayonet connection 7b can have an axially symmetric form or, advantageously, in particular in the attachment elements of a diameter of 1.5" (38.1 mm) for example, a non-aligned form (Fig. 6), in such a manner that the axis 7c of the attachment element 7b is not coincident with the axis of the related hole 4, so as to enable positioning of such attachment elements and filters 9 also on fluid-treatment devices 1 having lower diameters than those normally used.

The process for manufacturing the fluid-treatment device 1 described above as to its structure is the following.

At the beginning plate 3 forming part of base 2 is made. Manufacture of same takes place by chip removal and optionally the possible plates 3a-3b are secured to each other.

In particular, at some holes 4a an annular inner edge **8**' is left and it is disposed inside the thickness of plate 3, as shown in Fig. 3.

Subsequently, by plastic deformation, by a drawing operation for example, the edge 8' is deforming causing it to protrude to the outside of plate 3 in such a manner as to make the connecting profiles 8, in particular the deformed profiles 8a. For instance, deformed profiles 8a are the lower profiles in Figs. 1, 2 and 3 and the upper profiles in Figs. 4 and 5. In particular, each of edges 8' is deformed in such a manner as to form the deformed profile 8a.

Other connecting profiles 8 consisting of the integrated profiles 8b, are on the contrary merely made by chip removal. In particular, integrated profiles are the upper profiles in Figs. 1, 2 and 3.

The outer channels 7a and preferably also the bayonet connections 7b are then preferably welded to the connecting profiles 8 through end-to-end welding, preferably carrying out welding from the inside of the through holes 4.

When positioning of said elements has been completed, filters 9 are secured to the bayonet connections 7b.

Finally, the device is completed through positioning of casing 5 and fastening thereof to base 2, thus forming the inner chamber 5a.

The invention achieves important advantages.

An important advantage is given by the presence of profiles 8 enabling simple, cheap and clean welding, in particular if obtained inside holes 4. In addition, end-to-end welding of ducts 6 allows perfect inside and outside cleaning and polishing of the welding seam.

A further advantage is represented by the fact that device 1 has a base 2 of smaller sizes and cheaper manufacturing costs, in particular due to the manufacturing process through combined chip removal and plastic deformation.

In addition, the bayonet connections 7b are no longer directly obtained out on a plate 3 by chip removal, but are made of sheet metal and are subsequently welded, thus producing a simpler and cheaper product. In addition, the connecting profiles 8 can be coupled to attachment elements 7b that can be of the type obtained both by mechanical working and by moulding.

Another advantage resides in the particular configuration of Fig. 6 enabling positioning of bayonet connections 7b having a diameter of 1.5" (38.1 mm) for example on fluid-treatment devices 1 of smaller diameter than those generally used.

The invention is susceptible of variations falling within the scope of the inventive idea.

All of the details can be replaced by equivalent elements and the materials, shapes and sizes can be of any nature and magnitude.

## Claims

1. A manufacturing process for a fluid-treatment device (1), said device (1) comprising: a casing (5) defining a chamber (5a) adapted to receive said fluid and including a base (2) defining through holes (4), ducts (6) for said fluid comprising said through holes (4) and suitable to enable fluid passage through said casing (5), said process being **characterised in that** it comprises manufacture of at least one plate (3), part of said base (2) including, at least at one of said through holes, at least one connecting shape or profile (8) defining a portion of one said duct (6) and of annular form protruding from said plate (3), **and in that** it comprises manufacture of at least one deformed profile (8a) constituting at least one of said connecting profiles (8), through working by chip removal and subsequent working by plastic deformation.

2. A process as claimed in claim 1, wherein said working by chip removal forms said plate (3) comprising at least one annular edge (8') at said through holes (4), which edge is disposed within the thickness of said plate (3), and said working by plastic deformation contemplates deformation of said edge (8') making it protrude to the outside of said plate (3) in such a manner as to form said connecting profiles (8).

3. A process as claimed in one or more of the preceding claims, comprising manufacture of at least one integrated profile (8b) constituting at least one of said connecting profiles (8), through working by chip removal.

4. A process as claimed in one or more of the preceding claims, wherein said ducts (6) are at least partly defined by channels (7) connected to said base (2), and wherein said process comprises a step of end-to-end welding of at least one of said connecting profiles (8) to at least one of said channels (7).

5. A process as claimed in either claim 3 or 4, wherein said end-to-end welding steps are obtained by welding from the inside of said through holes (4).

6. A process as claimed in one or more of the preceding claims, wherein said ducts (6) are at least partly defined by at least one outer channel (7a) connected to said base (2) and wherein said at least one deformed profile (8a) constitutes part of said at least one outer channel (7).

7. A process as claimed in one or more of the preceding claims, wherein said ducts (6) are at least partly defined by at least one attachment element (7b) for filters (9) connected to said base (2), and wherein said at least one deformed profile (8a) constitutes part of said at least one outer channel (7).

8. A fluid-treatment device (1) comprising a casing (5) defining a chamber (5a) adapted to receive said fluid and including a base (2), ducts (6) for said fluid connected to said base (2) and suitable to enable fluid passage through said casing (5); said casing (5) including a base (2) comprising through holes (4) constituting part of said ducts (6), **characterised in that** said base (2) comprises at least one plate (3) having, at least at one of said through holes, (4) a connecting profile (8) defining a portion of one said duct (6) and of annular form protruding from said plate (3) and of one piece construction with said plate (3).

9. A device (1) as claimed in one or more of the preceding claims, wherein said attachment element (7b) has a central axis (7c) that is not coincident with the axis of said hole (4) to which it is connected, so as to allow positioning of attachment elements (7b) of bigger sizes.

10. A fluid-treatment device (1) consisting of a filtering device.
